# EUROPEAN PATENT SPECIFICATION

(11) **EP 0 539 198 B1**
(45) Date of publication and mention of the grant of the patent: **26.08.1998**
(21) Application number: 92309652.3
(22) Date of filing: 22.10.1992
(51) Int. Cl.: C03B 37/014, C03B 37/018

(54) **Process and apparatus for production of optical fiber preform**
Verfahren und Vorrichtung zur Herstellung von Vorformen für optische Fasern
Procédé et dispositif pour la production de préformes de fibres optiques

(30) Priority: 25.10.1991 JP 279274/91; 29.10.1991 JP 282821/91; 30.10.1991 JP 284561/91; 18.05.1992 JP 149972/92; 16.06.1992 JP 181931/92; 24.06.1992 JP 190048/92
(43) Date of publication of application: 28.04.1993
(73) Proprietor: THE FURUKAWA ELECTRIC CO., LTD., Tokyo 100 (JP)
(72) Inventor: Ishida, Yoshinori, 252-106, Furukawa-shataku, Ichihara-shi, Chiba-ken 290 (JP); Mikami, Toshihiro, Ichihara-shi, Chiba-ken 290-01 (JP); Komura, Yukio, 3-405, Shallman-makuhari, Chiba-shi, Chiba-ken 262 (JP)
(74) Representative: Jackson, Peter Arthur

(56) References cited:
- EP-A- 0 127 041
- DE-A- 2 079 742
- DE-A- 3 517 450
- PATENT ABSTRACTS OF JAPAN vol. 9, no. 1 (C-259)5 January 1985 & JP-A-59 156 930 (SUMITOMO DENKI KOGYO KK) 6 September 1984
- PATENT ABSTRACTS OF JAPAN vol. 5, no. 79 (C-56)23 May 1981 & JP-A-56 026 741 (NT&T CORP) 14 March 1981
- PATENT ABSTRACTS OF JAPAN vol. 14, no. 227 (C-718)15 May 1990 & JP-A-2 055 241 (HITACHI CABLE LTD) 23 February 1990
- PATENT ABSTRACTS OF JAPAN vol. 7, no. 281 (C-200)15 December 1983 & JP-A-58 161 936 (SUMITOMO DENKI KOGOYO KK) 26 September 1983
- PATENT ABSTRACTS OF JAPAN vol. 13, no. 49 (C-565)3 February 1989 & JP-A-63 242 938 (TATSUTA ELEC WIRE & CABLE CO) 7 October 1988
- PATENT ABSTRACTS OF JAPAN vol. 8, no. 62 (C-215)23 March 1984 & JP-A-58 217 447 (NIPPON DENSHIN DENWA KOSHA) 17 December 1983
- PATENT ABSTRACTS OF JAPAN vol. 8, no. 62 (C-215)23 March 1984 & JP-A-58 217 448 (NIPPON DENSHIN DENWA KOSHA) 17 December 1983
- PATENT ABSTRACTS OF JAPAN vol. 6, no. 143 (C-117)3 August 1982 & JP-A-57 067 038 (NIPPON DENSHIN DENWA KOSHA) 23 April 1982

## Description

The present invention relates to a process and apparatus for the production of an optical fiber preform used for the production of an optical fiber.

A single mode optical fiber, for example, has a core of 10 µm at its center and a cladding of an outer diameter of 125 µm formed around the same. Such an optical fiber is produced by heating a porous optical fiber preform having a portion to become the core and a portion to become the cladding and drawing the same to the above-mentioned thickness (or diameter).

As processes for production of a porous optical fiber preform, there are known, for example, the outer vapor deposition method (OVD method) and the vapor axial deposition method (VAD method).

Here, a description will be made of the process of production of a porous optical fiber preform common to the OVD method and VAD method. First, a starting preform comprised of the portion to become the core of the optical fiber or the portion to become the core with a portion to become part of the cladding formed around it is produced. This starting preform is glassified to produce a seed rod (or a starting rod). The seed rod is rotated as a target. An oxygen-hydrogen burner is used to hydrolyze vapor of a feedstock gas such as SiCl₄ in the oxygen-hydrogen flame to form particulates including glass particulates such as SiO₂. The particulates are blown from the oxygen-hydrogen burner to the rotating target to adhere to and deposit on the soot body to form the cladding on the target. The particulates are continued to be deposited on the deposited soot body from the oxygen-hydrogen burner until the soot body reaches a predetermined outer diameter. The seed rod with the predetermined outer diameter of a soot body formed on it is used as the porous optical fiber preform.

The deposition yield of glass (SiO₂) particulates on the target by this process of production of an optical fiber preform is about 20 to 40 percent (%) at most and the deposition speed is about 5 to 10 g/minute, so various processes have been proposed aimed at improving the deposition efficiency, improving the production efficiency, and reducing the production costs. Various processes have also been proposed for improving the quality of the porous optical fiber preform.

Japanese Unexamined Published Patent Application No. 58-161936 discloses a process for production of an optical fiber preform by the OVD method wherein electrodes are laid in the seed rod along the axial center of the same, the seed rod or the soot body formed around the outside of the same is charged with a negative polarity, and the resultant static electricity is used to improve the deposition rate of the glass particulates on the target. This process, however, has the disadvantage that the holes made for laying the electrodes along the axial center of the seed rod remain in the optical fiber after the optical fiber preform is formed, heated, and drawn to produce the optical fiber. Further, in this process, when the outer diameter of the soot body becomes larger, the soot body is charged from inside the seed rod, so when the outer diameter of the soot body becomes larger, the charge on the surface of the soot body falls and there is the problem that an optical fiber preform with a large outer diameter cannot be efficiently produced.

Japanese Unexamined Published Patent Application No. 57-67038, Japanese Unexamined Published Patent Application No. 58-217447, Japanese Unexamined Published Patent Application No. 58-217448, and Japanese Unexamined Published Patent Application No. 60-36341 disclose the OVD and VAD methods of the production of optical fiber preforms, similar to the above method. In particular, Japanese Unexamined Published Patent Application No. 58-217447 discloses the VAD method wherein a high DC voltage is applied to a flow of gas to charge the gas flow with negative ions, the negative ion gas is blown on the surface of the target to charge the target with a negative polarity, and the potential difference is used to cause glass particulates to deposit on the target. Even with these processes, however, it is still not possible to achieve the desired improvement of the deposition yield of glass particulates and the shortening of the production time.

The process disclosed in Japanese Unexamined Published Patent Application No. 58-217447 further suffers from the problem explained below. When glass particulates and ion gas with an opposite polarity are blown on a target, the flow of the glass particulates heading toward the target is obstructed by the flow of the ion gas, so the deposition (yield) of glass particulates on the target falls. Ideally, the opposite polarity ion gas is supposed to cause the surface of the target to be charged to a polarity opposite to the glass particulates so that the glass particulates are drawn to the surface of the target where they are electrically neutralized, but in practice a considerable portion ends up neutralized in the space between the burner and the target and the effects hoped for cannot be obtained.

Thus it is the object of the invention to resolve, for example, the problems in the process of production of an optical fiber preform disclosed in JP-A-58-217447 and improve the deposition rate of glass (SiO₂) particulates on the soot body and shorten the production time.

JP-A-59/156930 discloses a process of producing an optical fiber preform, comprising the steps of hydrolysing a feedstock gas supplied from an oxygen-hydrogen burner in the oxygen-hydrogen flame to produce glass particulates; charging the particulates; and blowing the charged particulates onto a target comprised of a seed rod or a soot body formed on the seed rod so as to cause them to deposit on the target and build up as a soot body; wherein the target and the burner are made to move relatively to each other in the longitudinal direction of the target and the target is made to rotate about its longitudinal axis, and according to a first aspect of the present invention, such a process is characterised in that before blowing the charged particulates ejected from the burner on to an area of the target, ions charged to polarity opposite to the charging polarity of the particulates are blown on this area of the target to charge this area of the target to the polarity opposite to the charging polarity of the particulates.

JP-A-59/156930 also discloses an apparatus for production of an optical fiber preform, comprising an oxygen-hydrogen burner, means for supplying a feedstock gas to said oxygen-hydrogen burner so that glass particulates can be formed in the flame of the burner by hydrolysing the feedstock gas which particulates can be blown to the target by the burner, means for supporting a target consisting of a seed rod or a soot body formed on a seed rod, a drive mechanism which causes the target and the burner to move relatively to each other in the longitudinal direction of the target and causes the target to rotate about its longitudinal axis and means for charging the glass particulates at a predetermined polarity before blowing the particulates to the target, and according to a second aspect of the present invention, such an apparatus is characterised by means for ejecting into an area of the target ions charged to a polarity opposite to the charging polarity of the particulates before blowing the charged particulars ejected from the burner to the above area of the target.

In the accompanying drawings:
Fig. 1 is a constituent view of an apparatus for production of an optical fiber preform of the present invention;
Fig. 2 is a constituent view of a modification of the apparatus of Fig. 1.
Fig. 3 is a constituent view of another modification of the apparatus of Fig. 1; and
Fig. 4 is a constituent view of still another modification of the apparatus of Fig. 1.

An explanation will now be made of a process and apparatus for the production of an optical fiber preform by the OVD method.

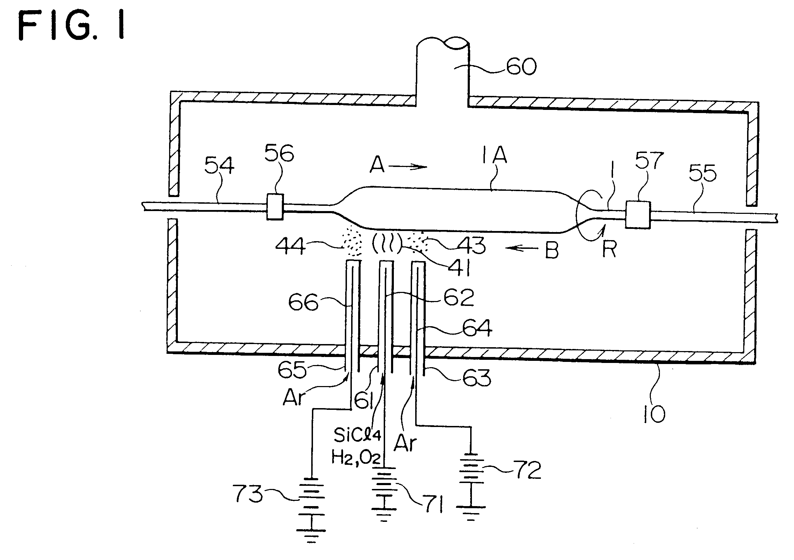

Figure 1 is a view showing the construction of an apparatus for the production of an optical fiber preform.

The apparatus for production has an discharge tube (hood) 60 provided at the top of the bell jar 10, a burner 61 affixed so as to project from the outside to the inside of the bell jar 10, a first charging nozzle 63 at the right side of the figure, and a second charging nozzle 65 at the left side of the figure. These nozzles 63 and 65 function as ion ejectors.

The burner 61, the first charging nozzle 63, and the second charging nozzle 65 are aligned at the same side wall of the bell jar 10. In the burner 61 is fitted an electrode wire 62, to which electrode wire 62 is connected a positive polarity DC power source 71. The first charging electrode 72 has an electrode wire 64 fitted inside it, to which electrode wire 64 is connected a first negative polarity DC power source 72. The second charging nozzle 65 has an electrode wire 66 fitted inside it, to which electrode wire 66 is connected a second negative polarity DC power source 73.

In the bell jar 10, the seed rod 1, which is axially supported by the chucks 56 and 57 affixed to the front ends of the shafts 54 and 55 rotating at the two sides, and the soot body 1A formed on the top surface of the seed rod 1 are made to rotate in the direction of the arrow R by the shafts 54 and 55 and are moved so as to traverse in the direction A or B perpendicular with the direction of rotation. Figure 1, due to illustrative reasons, does not show the mechanism (lathe) for making the shafts 54 and 55 traverse while rotating in the above manner.

The burner 61, the first charging nozzle 63, and the second charging nozzle 65 are placed in a bell jar 10 so as to intersect with the seed rod 1 and soot body 1A which are rotated and made to traverse.

Oxygen, hydrogen, SiCl₄, and other feedstock gas flow along the electrode wire 62 in the burner 61. The SiCl₄ in the oxygen-hydrogen flame 41 synthesized in the bell jar 10 by the feedstock gas is hydrolyzed to synthesize SiO₂ particulates. The particulates are formed as the soot body 1A around the seed rod 1. Further, soot is deposited on the soot body 1A formed around the seed rod 1 to grow the soot body 1A.

As mentioned above, the soot body 1A rotates in the rotational direction R along with a traverse motion in the left and right directions A and B.

The soot body 1A is synthesized inside the bell jar 10 and glass (SiO₂) particulates etc. not contributing to the synthesis of the soot body 1A and not depositing on the soot body 1A are exhausted from the hood 60. The waste product is processed by a scrubber.

The electrode wire 62 inserted into the burner 61 is charged to a positive polarity high voltage by the positive polarity DC power source 71, so there is a corona discharge due to the high voltage charge and the feedstock gas introduced into the burner 61 is charged to a positive polarity and glass particulates charged to a positive polarity are ejected from the front end of the burner 61.

On the other hand, since the electrode wire 64 and the electrode wire 66 charged with a negative polarity by the first negative polarity DC power source 72 and the second negative polarity DC power source 73 are inserted in the first charging nozzle 63 and the second charging nozzle 65, the inert gas flowing along the electrode wires 64 and 66 in the charging nozzles 63 and 65, for example, argon gas or N₂ gas, is ejected as negative ions 43 and 44, which negative polarity negative ions 43 and 44 cause the soot body 1A to be charged to a negative polarity.

In this way, since the soot body 1A is charged to a negative polarity and the positively charged glass particulates are sent from the burner 61, the effect of deposition of the glass particulates on the soot body 1A by the static electricity in addition to the deposition due to the ejection force becomes higher.

So that the flow of the oxygen-hydrogen flame 41 ejected from the burner 61 is not disturbed by the flow of negative ions 43 or negative ions 44 ejected from the first charging nozzle 63 or the second charging nozzle 65, the charging nozzles 63 and 65 are placed at a predetermined distance away from the burner 61.

When the soot body 1A moves in the left direction B, the right side first charging nozzle 63 provided at a position ahead of the burner 61 in the direction of movement B is used to spray negative ions 43 on the soot body 1A, then glass particulates sprayed from the burner 61 are made to adhere to the soot body 1A.

On the other hand, when the soot body 1A moves in the right direction A the left side second charging nozzle 65 is used to eject negative ions 44 on the soot body 1A and cause glass particulates sprayed from the burner 61 to deposit on the soot body 1A.

In this way, in the apparatus for deposition of optical fiber glass particulates, a gas control apparatus (not shown) for controlling the opening or closing of a gas valve (not shown) for leading gas from an argon gas container to the gas channel of the first charging nozzle 63 or the second charging nozzle 65 controls the opening and closing of the gas value in tandem with the mechanism for causing the soot body 1A to traverse and thereby introduces argon gas from the argon gas container selectively to the first charging nozzle 63 or the second charging nozzle 65.

In this way, since the first charging nozzle 63 and the second charging nozzle 65 operate alternately, it is possible to make common use of the first negative polarity DC power source 72 and the second negative polarity DC power source 73. That is, it is possible to eliminate the second negative polarity DC power source 73 and supply power to the electrode wire 66 from the first negative polarity DC power source 72.

Table 1 shows the specific conditions for operation of the apparatus for deposition of glass particulates.

**Table 1**

| Burner conditions (feedstock gas) | |
|---|---|
| SiO₂: | 20 g/min |
| H₂: | 80 ℓ/min |
| O₂: | 30 ℓ/min |
| Voltage of positive electrode in burner: | +20 to 30 kV |
| Voltage of negative electrode inside charging nozzle: | -10 to 20 kV |

| Soot body | |
|---|---|
| Speed of traverse: | 40 cm/min |
| Rotational speed: | 250 rpm |

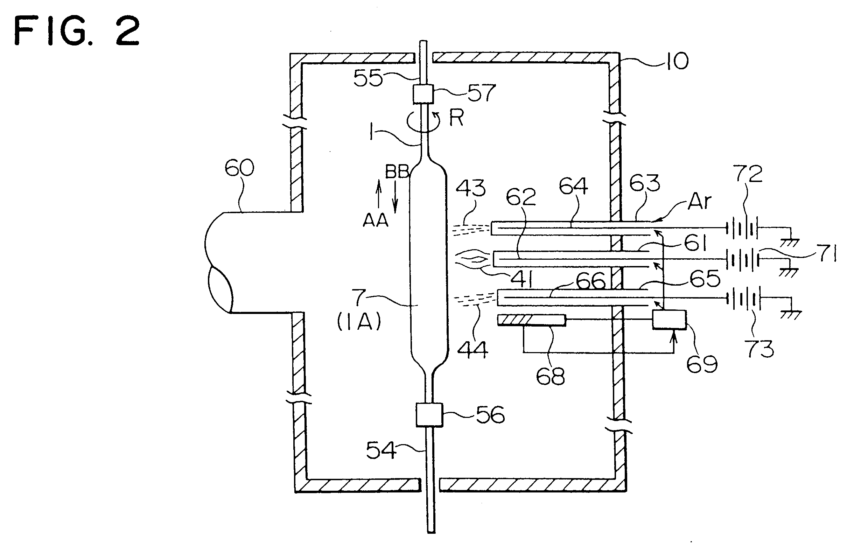

Figure 2 is a view showing the construction of another apparatus for producing the optical fiber preform.

The production apparatus shown in Fig. 2 differs from the construction in the apparatus for deposition of particulates shown in Fig. 1, wherein the soot body 1A was traversed in the horizontal direction, in that it is constructed to traverse in the vertical direction.

The selective driving of the first charging nozzle 63 and the second charging nozzle 65 in the apparatus means that, in the same way as above, when the soot body 1A is moved in the downward direction BB, negatively charged argon gas is ejected from the first charging nozzle 63 leading the burner 61 and that glass particulates charged to a positive polarity from the burner 61 are ejected from the burner 61 to the surface of the soot body 1A, which is negatively charged by the argon gas.

When the soot body 1A is moved in the upward direction AA, the second charging nozzle 65 and the burner 61 are driven in the same way as above.

Preferably, a surface potential measurement element 68 is provided near the soot body 1A inside the bell jar 10, the output signal of the same is input to a surface potential control apparatus 69 provided at the outside of the bell jar 10, and a surface potential control apparatus 69 controls the amount of ions of argon gas output from the first charging nozzle 63 or the second charging nozzle 65 in accordance with the surface potential detected by the surface potential measurement element 68. By this control of the amount of ions, it is possible to stabilize the efficiency of deposition of the glass particulates on the soot body 1A.

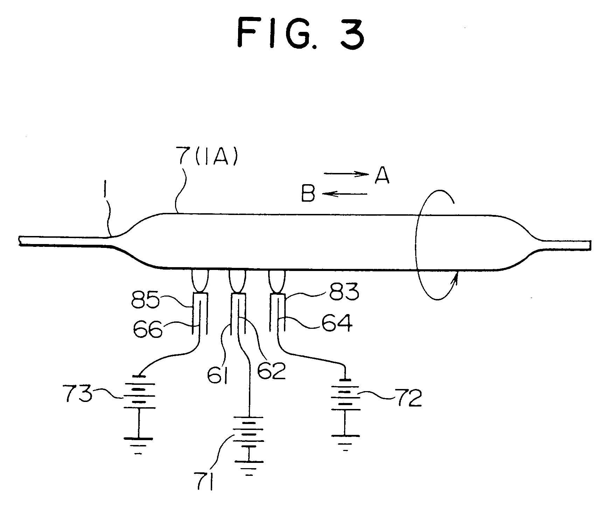

Figure 3 is a view showing another construction of the apparatus for production of an optical fiber preform. In Fig. 3, the bell jar 10, the hood 60, the shafts 54 and 55, and the chucks 56 and 57 illustrated in Fig. 1 and Fig. 2 are omitted.

This embodiment shows a modification of the apparatus for deposition of particulates shown in Fig. 1. Instead of the first charging nozzle 63 shown in Fig. 1, use is made of the first burner 83 in which an electrode wire 64 connected to a first negative polarity DC power source 72 is inserted and instead of the second charging nozzle 65 shown in Fig. 1, use is made of a second burner 85 in which an electrode wire 66 connected to a second negative polarity DC power source 73 is inserted.

That is, the first charging nozzle 63 and the second charging nozzle 65 in the apparatus for deposition of glass particulates shown in Fig. 1 are replaced by a first burner 83 and a second burner 85.

The basic operation is the same as the operation explained with reference to Fig. 1, but the amounts of oxygen, hydrogen, and SiCl₄ flowing to the burner 61 differ from the above values.

The charging polarities in the above-mentioned embodiment may be reversed. For example, the electrode wire 62 in the burner 61 shown in Fig. 3 may be made a negative polarity and the electrode wire 64 in the first charging nozzle 63 and the electrode wire 66 in the second charging nozzle 65 may be made a positive polarity. In summary, it is sufficient that the argon gas and the glass particulates attract each other by static electricity. It is enough that the polarities of the electrode wire 62 and the electrode wire 64 or electrode wire 66 be opposite.

The relationship of rotation and traverse motion of the soot body 1A, burner 61, first charging nozzle 63, and second charging nozzle 65 need only be such that the soot body 1A, the burner 61, etc. traverse relative to each other. As opposed to the above-mentioned relationship of movement, the soot body 1A alone may be made to rotate and the burner 61 side made to traverse.

Further, it is also possible to apply the surface potential measurement element 68 and the surface potential control apparatus 69 illustrated in Fig. 2 to the apparatus for production of an optical fiber preform shown in Fig. 1 and Fig. 3.

Further, in the above embodiments, inert gas was passed along the electrode wire in the charging nozzles, but oxygen and hydrogen gas may also be passed and burned. This is preferable, since if this is done, then the soot body can be heat treated to a desired hardness.

### Comparative Example 1

A comparison will now be made of the results of deposition of particulates by a process of production based on the VAD method (for example, Japanese Unexamined Published Patent Application No. 58-217447) and the results of deposition of glass particulates based on the embodiment of the present invention using the OVD method.

**Table 2**

| | Examples of embodiment | Conventional process |
|---|---|---|
| Movement | Traverse motion | Simple lifting |
| mechanism | (OVD) | (VAD) |
| Deposition speed | 10 to 30 g/min | 1 to 3 g/min |

| Feedstock feed | | |
|---|---|---|
| H₂ | 100 ℓ/min | Approx. 10 ℓ/min |
| SiCl₄ | 100 to 200 g/min | Approx. 2 to 5 g/min |
| Rotational speed | 150 to 200 rpm | 10 to 20 rpm |

In the VAD method, if the deposition speed is made faster, there is a detrimental effect on the formation of the core portion under the soot body. Therefore, in the VAD method, the deposition speed can only be made about 1 to 3 g/min. According to this embodiment of the present invention based on the OVD method, the amount of supply of the feedstock gas, the amount of the flame, the strength of the soot body, and the deposition speed are all improved compared with the results of deposition of glass particulates by the conventional process.

### Comparative Example 2

According to this method of optimizing the deposition yield of the glass particulates using the surface potential control apparatus 69 of the present invention, the time can be shortened about 40 percent compared with the conventional deposition speed and as a result an improvement is seen in the deposition yield of glass particulates.

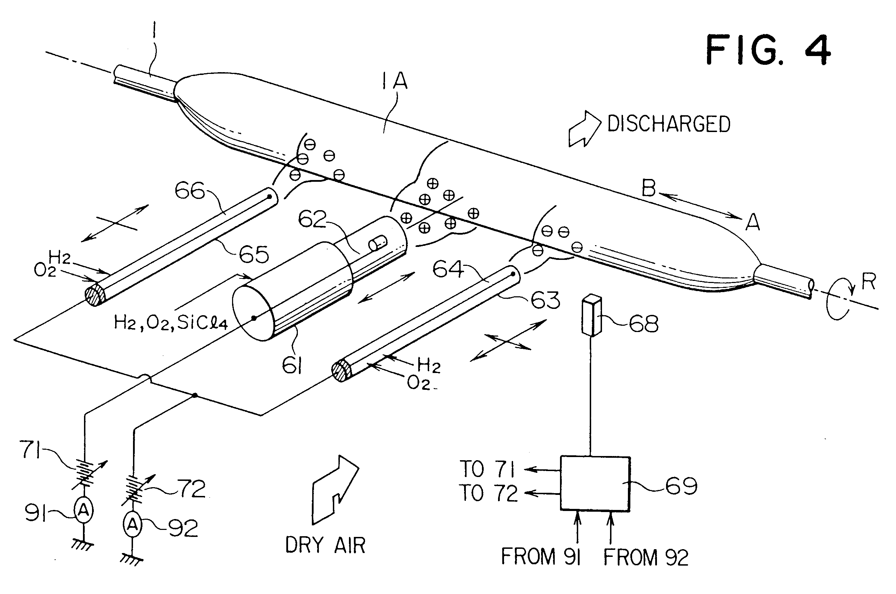

Another modification is illustrated in Fig. 4.

In this apparatus for production of an optical fiber preform, the seed rod 1 is placed in parallel to the horizontal direction, is made to traverse along the horizontal direction, and is rotated in the direction perpendicular to the traverse direction. A soot body 1A is deposited on the soot body 1A. Three burners 65, 61, and 63 are aligned in the direction perpendicular to the traverse direction of the seed rod 1.

In the center burner 61, an electrode 62 connected to a positive polarity DC high voltage power source 71 is inserted. An electrode 64 is inserted into the burner 63, and an electrode 66 is inserted into the burner 65. A negative polarity DC high voltage power source 62 is connected to the electrodes 64 and 66. The positive polarity DC high voltage power source 71 is provided via the ammeter 91, and the negative polarity DC high voltage power source 72 is provided via the ammeter 92. O₂ gas, H₂ gas, and SiCl₄ are introduced to the center burner 61. Glass (SiO₂) particulates charged to a positive polarity by the electrode 62 are deposited on a seed rod 1 or the soot body 1A deposited on the same. The burner 63 or the burner 65 at the position ahead of the ejection of glass particulates from the burner 61 is selectively driven according to the traverse direction of the seed rod 1. O₂ gas and H₂ gas are introduced to the burner 63 or 65 and are charged to a negative polarity by the electrode 64 or 66. The oxygen-hydrogen gas charged to a negative polarity by the mixture of the O₂ gas and the H₂ gas is ejected from the burner 61 and charges to a negative polarity the seed rod 1 or the soot body 1A ahead of the glass particulates charged to a positive polarity, thereby improving the rate of deposition of the positive polarity glass particulates on the soot body 1A.

Further, the surface potential measurement sensor 68 and its control apparatus 69 are provided. The control apparatus 69 inputs the readings of the surface potential measurement sensor 68 and the ammeters 91 and 92 and, as mentioned above, controls the voltage of the positive polarity DC high voltage power source 71 or the negative polarity DC high voltage power source 72 in accordance with the surface potential of the soot body 1A.

With the apparatus described above, the speed by which the particulates are synthesized on the seed rod to form the soot body can be tremendously increased.

Further, the efficiency of deposition of the glass particulates on the soot body is strikingly improved, so it is possible to make effective use of resources and to tremendously reduce the cost of production of the soot body and, in turn, the cost of production of an optical fiber.

Further, the amount of waste product not depositing on the soot body and being discharged from the hood is decreased too, so that cost of treating the waste can be tremendously reduced as well.

Although the examples have been explained with reference to the OVD method they may also be applied to the VAD method.

## Claims

1. A process of producing an optical fiber preform, comprising the steps of hydrolysing a feedstock gas supplied from an oxygen-hydrogen burner (61) in the oxygen-hydrogen flame to produce glass particulates (7); charging the particulates; and blowing the charged particulates onto a target comprised of a seed rod (1) or a soot body (1A) formed on the seed rod so as to cause them to deposit on the target and build up as a soot body (1A); wherein the target and the burner are made to move relatively to each other in the longitudinal direction of the target and the target is made to rotate about its longitudinal axis, characterised in that before blowing the charged particulates (41) ejected from the burner on to an area of the target, ions (43,44) charged to a polarity opposite to the charging polarity of the particulates are blown on this area of the target to charge this area of the target to the polarity opposite to the charging polarity of the particulates.

2. A process of producing an optical fiber preform according to claim 1, wherein the particulates are charged in the burner (61).

3. A process of producing an optical fiber preform according to claim 1 or claim 2, wherein the surface potential of the target is measured (68), and the amount of ejection of the ions is controlled in response to the measured surface potential (69).

4. A process of producing an optical fiber preform according to claim 1 or claim 2, wherein the surface potential of the target is measured (68), and the amount of feedstock gas introduced to the burner is controlled in response to the measured surface potential (69).

5. A process of producing an optical fiber preform according to any one of claims 1 to 4, wherein the particulates at the burner (61) are charged by applying a DC voltage (71) to an electrode (62) disposed inside the burner.

6. A process of producing an optical fiber preform according to any one of claims 1 to 5, wherein the ions are charged by applying to an electrode (64,66) disposed inside a ion ejecting burner (63,65) a DC voltage (72,73) of an opposite polarity to the voltage charging the feedstock gas.

7. An apparatus for production of an optical fiber preform, comprising an oxygen-hydrogen burner (61), means for supplying a feedstock gas to said oxygen-hydrogen burner so that glass particulates can be formed in the flame of the burner by hydrolysing the feedstock gas which particulates can be blown to a target by the burner, means (56,57) for supporting the target consisting of a seed rod (1) or a soot body (1A) formed on a seed rod, a drive mechanism (70) which causes the target and the burner to move relatively to each other in the longitudinal direction of the target and causes the target to rotate about its longitudinal axis and means (62) for charging the glass particulates at a predetermined polarity before blowing the particulates to the target, characterised by means (63,65) for ejecting into an area of the target ions charged to a polarity opposite to the charging polarity of the particulates before blowing the charged particulars ejected from the burner (61) to the above area of the target.

8. An apparatus for the production of an optical fiber preform according to claim 7, wherein the means for charging the particulates includes an electrode (62) provided in the burner, and a DC high voltage power source (71) connected to the electrode and charging the feedstock gas passing in the burner along the electrode at a predetermined polarity and a predetermined level to provide the charged particulates.

9. An apparatus for production of an optical fiber preform according to claim 7, wherein the means for charging the particulates includes an electrode (3A) placed in the path of the ejecting particulates between the burner and the target, and a DC high voltage power source (71) connected to the electrode and applying a predetermined DC voltage to charge the particulates at a predetermined polarity and a predetermined level.

10. An apparatus for the production of an optical fiber preform according to any one of claims 7 to 9, wherein there are provided means (68) for measuring the surface potential of the target and a means (69) for controlling the amount of ejection of ions in response to the measured surface potential.

11. An apparatus for the production of an optical fiber preform according to any one of claims 7 to 9, wherein there are provided means (68) for measuring the surface potential of the target and a means (69) for controlling the amount of feedstock gas introduced to the burner in response to the measured surface potential.

## Patentansprüche

1. Verfahren zur Herstellung einer Vorform für optische Fasern (Lichtleitfasern), welches die folgenden Schritte umfaßt:
Hydrolysieren eines von einem Sauerstoff-Wasserstoff-Brenner (61) gelieferten Edukt-Gases in der Sauerstoff-Wasserstoff-Flamme zur Bildung von Glasteilchen (7), Aufladen der Teilchen, und
Blasen der aufgeladenen Teilchen auf ein Zielobjekt (Target), das einen Keimstab (1) oder einen auf dem Keimstab gebildeten Rußkörper (1A) aufweist, damit sich diese auf dem Zielobjekt ablagern und sich als Rußkörper (1) aufbauen,
wobei das Zielobjekt und der Brenner relativ zueinander in Längsrichtung des Zielobjekts bewegt werden und das Zielobjekt um seine Längsachse gedreht wird,
**dadurch gekennzeichnet,** daß vor dem Blasen aus dem Brenner ausgestoßener, aufgeladener Teilchen (41) auf einen Bereich des Zielobjekts Ionen (43, 44) mit einer zu der Ladungspolarität der Teilchen entgegengesetzten Polarität auf diesen Bereich des Zielobjekts geblasen werden, um diesen Bereich des Zielobjekts auf eine der Polarität der Teilchen entgegengesetzte Polarität aufzuladen.

2. Verfahren zur Herstellung einer Vorform für optische Fasern nach Anspruch 1, wobei die Teilchen in dem Brenner (61) aufgeladen werden.

3. Verfahren zur Herstellung einer Vorform für optische Fasern nach Anspruch 1 oder Anspruch 2,
wobei das Oberflächenpotential des Zielobjekts gemessen wird (68) und die Menge ausgestoßener Ionen in Abhängigkeit von dem gemessenen Oberflächenpotential (69) gesteuert wird.

4. Verfahren zur Herstellung einer Vorform für optische Fasern nach Anspruch 1 oder Anspruch 2,
wobei das Oberflächenpotential des Zielobjekts gemessen wird (68) und die Menge von in den Brenner eingebrachtem Edukt-Gas in Abhängigkeit von dem gemessenen Oberflächenpotential (69) gesteuert wird.

5. Verfahren zur Herstellung einer Vorform für optische Fasern nach einem der Ansprüche 1 bis 4,
wobei die Teilchen am Brenner (61) durch Anlegen einer Gleichspannung (71) an einer in dem Brenner befindlichen Elektrode (72) geladen werden.

6. Verfahren zur Herstellung einer Vorform für optische Fasern nach einem der Ansprüche 1 bis 5,
wobei die Ionen durch Anlegen einer Gleichspannung (72, 73) mit zu der Spannung, mit der das Edukt-Gas aufgeladen wird, entgegengesetzten Polarität an eine Elektrode (64, 66), die sich in einem Ionen ausstoßenden Brenner (63, 65) befindet, aufgeladen werden.

7. Vorrichtung zur Herstellung einer Vorform für optische Fasern, die enthält,
einen Sauerstoff-Wasserstoff-Brenner (61), Mittel zum Zuführen eines Edukt-Gases zu dem Sauerstoff-Wasserstoff-Brenner, so daß sich in der Flamme des Brenners durch Hydrolysieren des Edukt-Gases Glasteilchen bilden können, die durch den Brenner auf ein Zielobjekt geblasen werden, Mittel (56, 57) zur Befestigung des Zielobjektes, der aus einem Keimstab (1) oder einem auf einem Keimstab gebildeten Rußkörper (1A) besteht, einen Antriebsmechanismus (70), mit dem das Zielobjekt und der Brenner relativ zueinander in Längsrichtung des Zielobjektes gedreht werden und das Zielobjekt um dessen Längsachse gedreht wird, und Mittel (62) zum Aufladen der Glasteilchen auf eine bestimmte Polarität, bevor die Teilchen auf das Zielobjekt geblasen werden, **gekennzeichnet durch** Mittel (63, 65) zum Ausstoßen von Ionen mit einer zu der Ladungspolarität der Teilchen entgegengesetzten Polarität auf einen Bereich des Zielobjekts, bevor die aus dem Brenner (61) ausgestoßenen, geladenen Teilchen auf diesen Bereich des Zielobjektes geblasen werden.

8. Vorrichtung zur Herstellung einer Vorform für optische Fasern nach Anspruch 7,
worin das Mittel zum Aufladen der Teilchen eine in dem Brenner angeordnete Elektrode (62) und eine mit der Elektrode verbundene Hochgleichspannungsquelle (71) umfaßt, um das Edukt-Gas, das die Elektrode in dem Brenner passiert, auf eine bestimmte Polarität und einen bestimmten Pegel aufzuladen, um die geladenen Teilchen bereitzustellen.

9. Vorrichtung zur Herstellung einer Vorform für optische Fasern nach Anspruch 7,
worin das Mittel zum Aufladen der Teilchen eine in dem Weg der ausgestoßenen Teilchen zwischen dem Brenner und dem Zielobjekt angeordnete Elektrode (3A) und eine mit der Elektrode verbundene Hochgleichspannungsquelle (71) umfaßt, wobei zum Aufladen der Teilchen auf eine bestimmte Polarität und einen bestimmten Pegel eine bestimmte Spannung angelegt wird.

10. Vorrichtung zur Herstellung einer Vorform für optische Fasern nach einem der Ansprüche 7 bis 9,
worin Mittel (68) zur Messung des Oberflächenpotentials des Zielobjekts vorgesehen sind und Mittel (69) zur Steuerung der ausgestoßenen Menge Ionen in Abhängigkeit von dem gemessenen Oberflächenpotential.

11. Vorrichtung zur Herstellung einer Vorform für optische Fasern nach einem der Ansprüche 7 bis 9,
worin Mittel (68) zur Messung des Oberflächenpotentials des Zielobjekts vorgesehen sind und Mittel (69) zur Steuerung der in den Brenner eingebrachten Menge an Edukt-Gas in Abhängigkeit von dem gemessenen Oberflächenpotential.

## Revendications

1. Procédé de production d'une préforme de fibre optique, comportant les étapes consistant à hydrolyser un gaz, matière première sortant d'un brûleur à oxygène-hydrogène (61), dans la flamme d'oxygène-hydrogène pour produire des matières particulaires vitreuses (7); à charger les matières particulaires; et à souffler les matières particulaires, chargées, sur une cible constituée d'une tige formant germe (1) ou sur un corps de suie (1A) formé sur la tige formant germe de façon à provoquer leur dépôt sur la cible et à en faire un corps de suie (1A); dans lequel la cible et le brûleur sont faits pour se déplacer l'un par rapport à l'autre selon la direction longitudinale de la cible et la cible est faite pour tourner autour de son axe longitudinal, caractérisé par le fait qu'avant de souffler les matières particulaires, chargées (41), éjectées du brûleur, sur une zone de la cible, on souffle des ions (43, 44), chargés à une polarité opposée à la polarité de charge des matières particulaires, sur cette zone de la cible pour charger cette zone de la cible à la polarité opposée a' la polarité de charge des matières particulaires.

2. Procédé de production d'une préforme de fibre optique selon la revendication 1, dans lequel on charge les matières particulaires dans le brûleur (61).

3. Procédé de production d'une préforme de fibre optique selon la revendication 1 ou 2, dans lequel on mesure (68) le potentiel de surface de la cible et on commande l'importance de l'éjection des ions en fonction du potentiel de surface mesuré (69).

4. Procédé de production d'une préforme de fibre optique selon la revendication 1 ou la revendication 2, dans lequel on mesure (68) le potentiel de surface de la cible et on commande la quantité de gaz, matière première, introduit dans le brûleur en fonction du potentiel de surface mesuré (69).

5. Procédé de production d'une préforme de fibre optique selon l'une quelconque des revendications 1 à 4, dans lequel on charge les matières particulaires, dans le brûleur (61), en appliquant une tension continue (71) à une électrode (62) disposée à l'intérieur du brûleur.

6. Procédé de production d'une préforme de fibre optique selon l'une quelconque des revendications 1 à 5, dans lequel on charge les ions en appliquant à une électrode (64, 66), disposée à l'intérieur d'un brûleur (63, 65) éjectant les ions, une tension continue (72, 73) d'une polarité opposée à la tension de charge du gaz matière première.

7. Dispositif de production d'une préforme de fibre optique, comportant un brûleur à oxygène-hydrogène (61), des moyens pour envoyer un gaz, matière première, dans ledit brûleur à oxygène-hydrogène, de façon que des matières articulaires vitreuses puissent se former dans la flamme du brûleur par hydrolyse du gaz matière première, matières particulaires qui peuvent être soufflées sur une cible par le brûleur, des moyens (56, 57) pour supporter la cible, constitués d'une tige formant germe (1) ou d'un corps de suie (1A), formé sur une tige formant germe, un mécanisme d'entraînement (70) qui fait que la cible et le brûleur se déplacent l'un par rapport à l'autre selon la direction longitudinale de la cible et qui fait que la cible tourne autour de son axe longitudinal et des moyens (62) pour charger les matières particulaires vitreuses à une polarité prédéterminée avant de souffler les matières particulaires sur la cible, caractérisé par des moyens (63, 65) pour éjecter dans une zone de la cible des ions chargés à une polarité opposée à la polarité de charge des matières particulaires avant de souffler les matières particulaires, chargées, éjectées du brûleur (61), sur la zone ci-dessus de la cible.

8. Dispositif de production d'une préforme de fibre optique selon la revendication 7, dans lequel les moyens prévus pour charger les matières particulaires incluent une électrode (62) prévue dans le brûleur, et une source de puissance haute tension courant continu (71) reliée à l'électrode et chargeant le gaz, matière première, passant dans le brûleur le long de l'électrode à une polarité prédéterminée et à un niveau prédéterminé pour donner les matières particulaires chargées.

9. Dispositif de production d'une préforme de fibre optique selon la revendication 7, dans lequel les moyens prévus pour charger les matières particulaires incluent une électrode (3A) placée sur le chemin de l'éjection des matières particulaires entre le brûleur et la cible, et une source de puissance haute tension courant continu (71) reliée à l'électrode et appliquant une tension courant continu prédéterminée pour charger les matières particulaires à une polarité prédéterminée et à un niveau prédéterminé.

10. Dispositif de production d'une préforme de fibre optique selon l'une quelconque des revendications 7 à 9, dans lequel sont prévus des moyens (68) pour mesurer le potentiel de surface de la cible et des moyens (69) pour commander l'importance de l'éjection des ions en fonction du potentiel de surface mesuré.

11. Dispositif de production d'une préforme de fibre optique selon l'une quelconque des revendications 7 à 9, dans lequel sont prévus des moyens (68) pour mesurer le potentiel de surface de la cible et des moyens (69) pour commander la quantité de gaz, matière première, introduite dans le brûleur en fonction du potentiel de surface mesuré.
